# EUROPEAN PATENT SPECIFICATION

(11) **EP 2 789 059 B1**
(45) Date of publication and mention of the grant of the patent: **05.12.2018**
(21) Application number: 12854904.5
(22) Date of filing: 06.12.2012
(51) Int. Cl.: H01S 3/13, H01S 3/067, H01S 3/11, H01S 3/08, H01S 3/16, H01S 3/00, H01S 3/0941

(54) **HIGH-FIDELITY, HIGH-ENERGY ULTRASHORT PULSES FROM A NET-NORMAL-DISPERSION YB-FIBER LASER WITH AN ANOMALOUS DISPERSION HIGHER-ORDER-MODE FIBER**
HOCHENERGETISCHE ULTRAKURZE HIGH-FIDELITY-IMPULSE AUS EINEM YB-FASERLASER MIT NET-NORMAL-DISPERSION MIT EINER MODENFASER HÖHERER ORDNUNG MIT ANOMALER DISPERSION
IMPULSIONS ULTRA COURTES, DE HAUTE FIDÉLITÉ ET DE FORTE ÉNERGIE, ÉMISES PAR UN LASER À FIBRE OPTIQUE YB À DISPERSION NORMALE EN RÉSEAU, AVEC UNE FIBRE DE MODE D'ORDRE SUPÉRIEUR ET DISPERSION ANOMALE

(30) Priority: 06.12.2011 US 201161567570 P
(43) Date of publication of application: 15.10.2014
(73) Proprietor: OFS Fitel, LLC, Norcross, GA 30071 (US); Technische Universität Wien, 1040 Wien (AT)
(72) Inventor: JESPERSON, Kim, 2800 Kgs. Lyngby, Copenhagen (DK); GONZALES, Alma, Del Carmen Fernandez, A-3423 St. Andrae-woerden (AT); ZHU, Lingxiao, A-1030 Wien (AT); VERHOEF, Aart, Johannes, A-3423 St Andrae-woerden (AT)
(74) Representative: Zimmermann, Tankred Klaus
(86) International application number: PCT/US2012/068262
(87) International publication number: WO 2013/086203

(56) References cited:
- WO-A2-2012/112253
- US-A1- 2007 177 641
- US-A1- 2007 177 642
- US-A1- 2009 128 892
- US-A1- 2009 128 892
- US-A1- 2009 190 893
- US-A1- 2010 133 246
- DING EDWIN ET AL: "Passive mode-locking using multi-mode fiber", FIBER LASERS VIII: TECHNOLOGY, SYSTEMS, AND APPLICATIONS, SPIE, 1000 20TH ST. BELLINGHAM WA 98225-6705 USA, vol. 7914, no. 1, 10 February 2011 (2011-02-10), pages 1-14, XP060010576, DOI: 10.1117/12.873866 [retrieved on 1901-01-01]

## Description

### BACKGROUND

### Field of the Invention

Embodiments of the present invention generally relate to high energy, ultrashort pulses from a net normal dispersion ytterbium fiber laser with an anomalous dispersion higher-order mode fiber. More specifically, embodiments of the present invention relate to a fiber oscillator with all-fiber dispersion compensation delivering pulse parameters comparable to solid-state oscillators having good compensation of higher order dispersion and intracavity nonlinearities.

### Description of the Related Art

All integrated mode-locked Ytterbium-doped fiber lasers delivering high fidelity pulses or Ytterbium-solid state lasers delivering sub-200 fs pulses are very attractive as seed sources for Ytterbium fiber amplifier systems. The main demands for seed sources of such systems are good pulse quality and compressibility, and enough seed energy. The requirement for pulse energy and pulse compressibility becomes even more demanding for phase stabilized amplifier systems. In order to achieve a reliable phase lock, sub-100 fs pulses with a pulse-energy of several nj are required. While in many applications solid-state oscillators are used to achieve this, the robustness and stability of all-fiber oscillators offer an interesting alternative.

Recently, many different approaches to push pulse compressibility and energy of fiber oscillators have been explored. In general, two different operating regimes can be distinguished: (1) fiber oscillators with net anomalous intracavity dispersion, and (2) fiber oscillators with net normal intracavity dispersion. Fiber oscillators operating in the first regime can produce highly compressible pulses, down to below 30 fs, but with only very limited pulse energy, much less than one nj. In fact, in the net anomalous dispersion regime, the shortest pulse duration from an Yb-doped fiber oscillator was achieved at about 30 fs, with very limited pulse energy.

Fiber oscillators operating with normal intracavity dispersion can produce pulses with much higher pulse energy (i.e., several nj), but the pulse fidelity from such oscillators is much lower. In the net normal dispersion regime, higher pulse energies can be achieved, but generally such systems yield a reduced pulse fidelity compared to oscillators operating with net anomalous intracavity dispersion. The shortest pulse duration from an Yb-doped fiber oscillator operating in the net normal dispersion regime is 50 fs, with 5 nj pulse energy, using free space components (e.g., gratings) to introduce intracavity dispersion compensation. However, the pulse fidelity and the pulse duration were measured only with a second order autocorrelation, which does not provide reliable information of the pulse quality.

One of the main limitations in achieving better pulse quality is poor intracavity dispersion control. Most fiber oscillators with intracavity dispersion compensation use intracavity gratings. While the use of gratings sacrifices the robustness and stability of the fiber oscillator, the main limitation posed by intracavity gratings is that no compensation of higher order dispersion can be obtained. For more stable operation and better pulse fidelity, it is important to realize good compensation of higher order dispersion and intracavity nonlinearities. Hence, in order to develop a serious fiber- based alternative to the solid-state seed oscillators, fiber dispersion compensation is needed.

One approach for fiber based dispersion compensation is based on the design of waveguide dispersion in photonic crystal fibers. However, in order to achieve the required dispersion compensation, photonic crystal fibers with very small core diameters are needed, which leads to a large increase of the intracavity nonlinearities. Moreover, up to now, monolithic integration of photonic crystal fibers in fiber oscillators is problematic, since fusion splicing will destroy the fiber structure.

Thus, there is a need for high energy, ultrashort pulses from a net normal dispersion ytterbium fiber laser with a solid silica anomalous dispersion higher-order mode fiber.

### SUMMARY

The invention provides an oscillator according to claim 1 and a method according to claim 5.

Embodiments of the present invention generally relate to high energy, ultrashort pulses from a net normal dispersion ytterbium fiber laser with a solid silica anomalous dispersion higher-order mode fiber. More specifically, embodiments of the present invention relate to a fiber oscillator with all-fiber dispersion compensation delivering pulse parameters comparable to solid-state oscillators having good compensation of higher order dispersion and intracavity nonlinearities.

### BRIEF DESCRIPTION OF THE DRAWINGS

So the manner in which the above-recited features of the present invention can be understood in detail, a more particular description of embodiments of the present invention, briefly summarized above, may be had by reference to embodiments, which are illustrated in the appended drawings. It is to be noted, however, that the appended drawings illustrate only typical embodiments of embodiments encompassed within the scope of the present invention.
Figure 1 depicts a graphical representation of a fiber ring oscillator in accordance with one embodiment of the present invention;
Figure 2 depicts a graph showing an exemplary test results for dispersion as a function of wavelength for oscillators in accordance with embodiments of the present invention;
Figure 3 depicts a set graphs showing the performance characterization after compression of an oscillator in accordance with one embodiment, corresponding to the solid line dispersion curves in Figure 2 (left graph), a comparison with an all-normal dispersion oscillator (middle graph), and a time domain comparison (right graph); and
Figure 4 depicts a set of graphs showing the performance characterization after compression of an oscillator in accordance with one embodiment corresponding to the dashed lines in Figure 2, showing the measured second-harmonic frequency resolved optical gating-trace (left graph), the spectrum and spectral phase (center graph), and the time-domain representation of the output pulses (right graph).

The headings used herein are for organizational purposes only and are not meant to be used to limit the scope of the description or the claims. As used throughout this application, the word "may" is used in a permissive sense (*i*.*e*., meaning having the potential to), rather than the mandatory sense (*i.e.,* meaning must). Similarly, the words "include", "including", and "includes" mean including but not limited to. To facilitate understanding, like reference numerals have been used, where possible, to designate like elements common to the figures.

### DETAILED DESCRIPTION

Embodiments of the present invention generally relate to high energy, ultrashort pulses from a net normal dispersion ytterbium fiber laser with an anomalous dispersion higher-order mode fiber. More specifically, embodiments of the present invention relate to a fiber oscillator with all-fiber dispersion compensation delivering pulse parameters comparable to solid-state oscillators having good compensation of higher order dispersion and intracavity nonlinearities.

As used herein, the term "about" or "approximately," or derivatives thereof, when referencing a numerical value, should be deemed to include within ten percent of such numerical value in either direction. In addition, when such terms are utilized to described absolutes (*e.g.,* zero), the absolute should be deemed to include within one unit of reasonable measurement in either direction, as would ordinarily be used by those of ordinary skill in the art.

Many embodiments of the present invention seek to utilize the anomalous dispersion of a higher order mode (HOM) in a fiber to ensure stable modelocked operation with high pulse energy as set forth herein. HOM fibers are suitable for embodiments of the present invention because mode conversion can be achieved reliably, and integration of such HOM fibers is fairly straightforward. Additionally, the nonlinearities in the HOM module are reduced compared to those in standard single mode fiber (SMF), since the mode area in the HOM is larger. Furthermore, HOM fibers offer a possibility to compensate higher order dispersion terms in the cavity, which reduces the buildup of unwanted nonlinear phase on the pulses in the cavity.

In accordance with many embodiments, however, introducing anomalous dispersion alone is not enough to ensure stable modelocked operation with high pulse energy. As will be explained, when the total intracavity dispersion is anomalous, the pulse energy that can be extracted is very limited. Alternatively, when the total intracavity dispersion is normal, it is possible to extract higher energy pulses in a stable modelocked regime, but the pulse fidelity is compromised by the presence of significant amounts of higher order dispersion. For example, third order dispersion tends to destabilize the pulsed operation, *i.e.* it limits the pulse energy and pulse fidelity, and fourth order dispersion limits the operation bandwidth and compressed pulse duration. Thus, embodiments of the present invention seek to provide improved control of the intracavity dispersion in order to extract the highest pulse energy with the best compressible output pulses, up to the limits set by the gain bandwidth of the active medium, or even beyond.

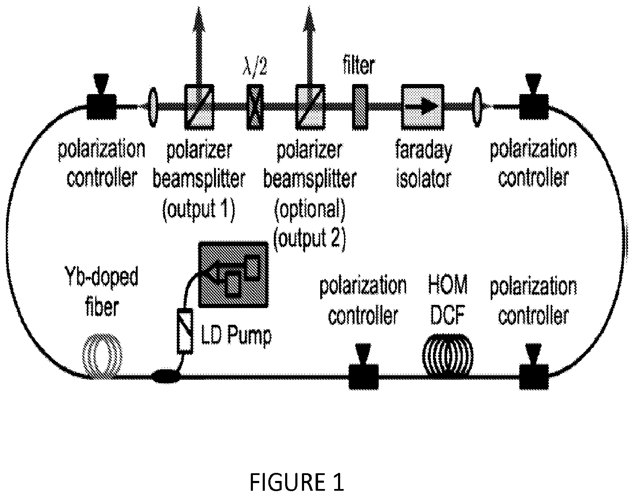

Figure 1 depicts a graphical representation of a fiber ring oscillator in accordance with one embodiment of the present invention. The fiber ring oscillator generally comprises a laser diode pump, an ytterbium-doped fiber, a polarization controller, a first output, an optional second output, a filter, an isolator such as a faraday isolator, additional polarization controller(s), and a Higher-Order Mode (HOM) fiber. In certain embodiments, the free space components may all be replaced by fiber-based equivalents.

In many embodiments, the first output comprises a polarization beamsplitter for pulse cleaning, and works with the non-linear polarization rotation and the spectral filter to maintain modelocked operation of the system. The optional second output may comprise a similar type of apparatus as the first output, and the output ratio between the first and second output may be controlled, for example, via a half-wave plate. In many embodiments, the fiber ring oscillator works in a net normal dispersion regime.

In many embodiments, applicable power ranges for the laser pump range from near 0 Watts to several Watts, depending on the embodiment and type of active fiber used. In accordance with one embodiment of the present invention, approximately 500 - 700 mW of pump power is provided. The ytterbium-doped fiber may generally comprise a highly doped fiber, including highly doped fibers that are photo darkening resistant.

In one embodiment, at least one polarization beam splitter is utilized to facilitate the modelocking mechanism. The second output port, which may be optional, may comprise a fixed-ratio (fiber) beam splitter. In certain embodiments, it is estimated that the optimum output coupling ratio at the second output port to be about 75 percent, but stable operation may be obtained up to 90 percent. With higher available pump power, this number can be increased.

The role of the spectral filter may be taken over by selecting a WDM or fiber isolator with a sufficiently narrow operation bandwidth. The filter may comprise a full-width-at-half-maximum transmission bandwidth up to 40 nm.

In many embodiments, the HOM fiber should be designed such that it compensates for 50% or more of the group delay dispersion and third order dispersion of the single mode fiber used in the oscillator.

A type of oscillator, such as the one depicted in Figure 1, was utilized to conduct experimental tests in accordance with embodiments of the present invention. Three separate examples were conducted: (1) using an all-normal dispersion oscillator with no intracavity dispersion compensation at a repetition rate of 24 MHz, (2) an oscillator using an HOM module for intracavity dispersion compensation having a repetition rate of 24 MHz, and (3) an oscillator using an HOM module for intracavity dispersion compensation having a repetition rate of 20 MHz. For the second and third experiments, the fiber length of the HOM module was chosen such that the GDD matches a majority of the SMF GDD in the oscillator.

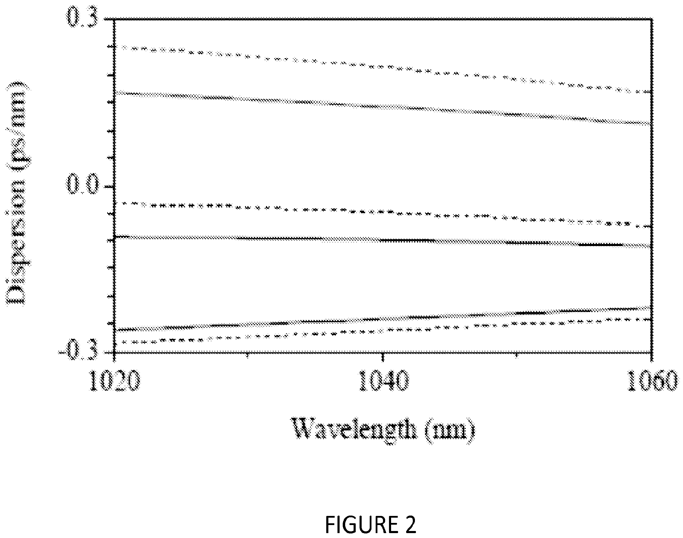

Figure 2 depicts a graph showing exemplary test results for dispersion as a function of wavelength for oscillators in accordance with embodiments of the present invention. In particular, Figure 2 shows the intracavity dispersion of the second and third experiments using the HOM fibers. As a shown in the Figure, the top two lines (the solid and dashed) are utilizing an HOM module, and the bottom three lines (the solid, dashed and dotted) are utilizing a SMF, and the middle dashed and solid lines are for total intracavity dispersion, which is normal for both experimental embodiments. Also shown in Figure 2 is the dispersion curve of the all-normal dispersion oscillator (ANDi) without the HOM fiber.

As shown in the Figure, the solid lines show the intracavity dispersion of the first embodiment of the oscillator, which had a repetition rate of 24 MHz. The bottom solid line shows the total dispersion of the normal dispersion components in that embodiment, mainly introduced by the single mode fiber and ytterbium doped active fiber. The top solid line shows the anomalous dispersion introduced by the HOM module. The middle solid line is the result of the addition of the two curves, which yields the total dispersion seen upon one roundtrip through the ring cavity. The dashed lines show the intracavity dispersion of the second embodiment of the oscillator, which had a repetition rate of 20 MHz. The bottom dashed line shows the total normal dispersion in the second embodiment, the difference between the normal dispersion in the first and second embodiments is due to the different length of single mode fiber used.

The top dashed line shows the anomalous dispersion introduced by the HOM module used in the second embodiment, which, as can be seen in Figure 2, was slightly different from the HOM module used in the first embodiment. The middle dashed line shows the addition of the top and bottom dashed curves, yielding the total dispersion seen upon one roundtrip through the ring cavity in the second embodiment. As a comparison, the dotted line on the bottom of the graph shows the dispersion introduced by the total of single mode fiber in the all-normal dispersion oscillator, which is in that case also the total intracavity dispersion. As also noted during the experimentation, only a limited amount of group delay dispersion (GDD) and third order dispersion (TOD) are accumulated per cavity roundtrip in the case of the oscillators with the HOM modules, in contrast to the large amount of GDD and TOD accumulated in the all-normal dispersion oscillator.

From the experimental measurements, it was determined that modelocked operation in the oscillator is based on nonlinear polarization rotation in combination with spectral filtering. Stable operation is ensured using fiber polarization controllers before and after the HOM module, as shown in Figure 1. Although the HOM module is generally designed to be polarization insensitive, stable modelocked operation requires substantial control of the polarization state at its input and output, hence in many embodiments, inline polarization controllers are installed directly before and after the HOM fiber, as shown in Figure 1. It is believed that the long period gratings (LPGs) that convert the fundamental LP01 mode into the LP02 mode, and vice versa, in the HOM are slightly tilted, requiring such controllers. However, in certain embodiments, by utilizing improved LPGs, the use of polarization controllers right before and after the HOM module are not required.

During the experimentation, a complete characterization of the oscillator output pulses is made for the all-normal dispersion oscillator having 2.4 nJ output energy, the oscillator with the first HOM module having 2.4 nJ output energy, and for the oscillator with the second HOM module having 6 nJ output energy. The different output energies for the different oscillators was to ensure stable modelocked operation and good pulse quality, which in the case of the all-normal dispersion oscillator and the oscillator with the first HOM module, was known to be not possible at higher output energies.

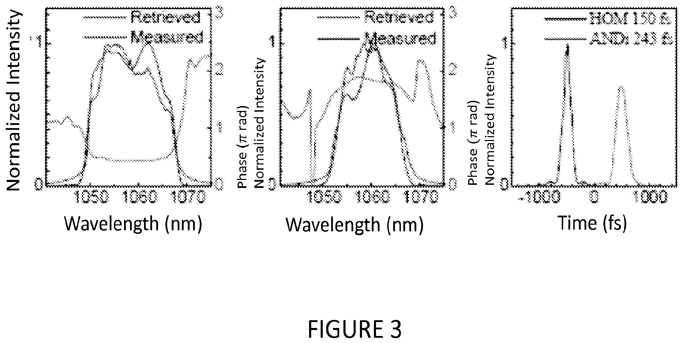

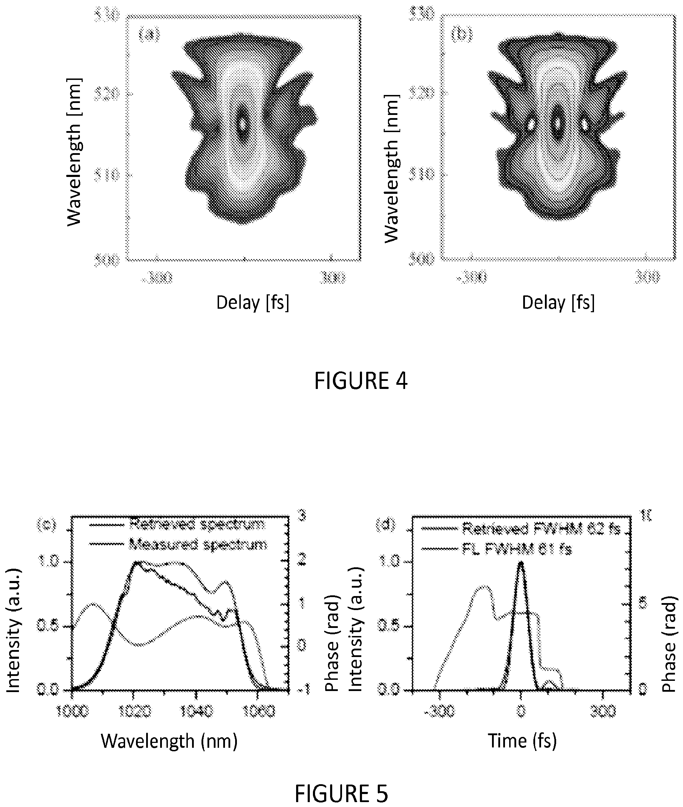

Using a high bandwidth oscilloscope and matching photodiode, and a long range Second-Harmonic Generation (SHG) Frequency-Resolved Optical Gating (FROG) scan, it was determined that the oscillators work in a single pulse mode. The results of a finer, short range, SHG FROG scan after compression with a transmission grating pair are presented in Figures 3 and 4. Figure 4 displays the FROG characterization after compression of the oscillator, with the oscillator having the first HOM module on the left, the all-normal dispersion oscillator in the center. In both the left and center graphs, the retrieved spectrum is shown as the solid curve, and the retrieved spectral phase is shown as the dashed curve. The retrieved time-domain representations of the pulses from both oscillators are shown in the right graph of Figure 3, having the first HOM module oscillator curve shown as the taller curve to the left of the all-normal dispersion oscillator curve.

Figure 5 generally depicts a FROG characterization after compression of the oscillator with the second HOM module showing the output in a grating compressor. The image on the left depicts the results as actually measured. The solid curve in the middle graph shows the retrieved spectrum, and the dotted curve in the middle graph shows the retrieved spectral phase. The solid curve in the right graph shows the retrieved temporal profile of the pulse. The excellent compression is illustrated by the comparison with the Fourier limited profile of the pulse, which is shown as the dashed curve in the right graph. The slightly longer retrieved pulse duration as compared to the Fourier limited duration and the small satellite visible on the retrieved pulse are the result of uncompensated third order dispersion in the grating compressor. The retrieved temporal phase is shown as the dotted curve in the right graph.

The advantage of FROG characterization over other characterization methods is that it reliably shows whether a clean temporal pulse profile is obtained, or that a long-range pedestal is present. The disadvantage of many fiber oscillators is that they exhibit a large long-range pedestal, which limits their usefulness for further amplification for example. Since the long range pedestal can contain a large portion of the out-coupled energy, even as large as 50 percent, the pulse energy contained in the short compressed pulse may be largely over-estimated. Therefore, FROG characterization facilitates the most complete assessment of the pulse fidelity of ultrafast lasers.

As a result of the testing, the oscillator without intracavity dispersion compensation delivers the longest pulses and the smallest bandwidth; the oscillator with the first HOM module delivered pulses with a larger bandwidth, that consequently could be compressed to a pulse duration as short as 150 fs; and the oscillator with the second HOM module delivered the broadest spectrum, and the pulses could be compressed to almost their Fourier transform limited duration. The slight difference between the Fourier limited duration of 61 fs and the retrieved duration of 62 fs and the stronger satellite compared to the Fourier limited pulse is likely attributed to the residual TOD after the grating compressor.

As a result of the testing, embodiments of the present invention comprise a fiber oscillator with all-fiber dispersion compensation, delivering pulse parameters comparable to solid-state oscillators, and a precise way forward to further improve the performance of such fiber oscillators. As supported by the experimental results presented herein, use of improved dispersion compensation in the oscillator cavity directly leads to better pulse compressibility and higher attainable output pulse energy.

It should be appreciated, the physical mechanism underlying the stable modelocked operation of the above described oscillators is understood to be based on nonlinear polarization evolution. While the nonlinear polarization evolution, in conjunction with the polarization beamsplitter output coupler acts as an artificial saturable absorber, the action of self phase modulation, dispersion and the spectral filter ensure that the temporal characteristics of the pulse are reproduced after each roundtrip. While in an oscillator with no, or poor dispersion compensation the balance of dispersive stretching of the pulse during one roundtrip of the oscillator and the action of self phase modulation is only achieved at the cost of the generation of a substantial pulse pedestal, well designed dispersion compensation, as is achieved with HOM fibers, allows for better balancing of the actions of dispersive stretching, self phase modulation and spectral filtering during stationary operation of the oscillator.

Also, third order dispersion stretches pulses asymmetrically, *i.e.* the red and blue wings of the spectrum. The compensation of third order dispersion is especially critical in this sense, because it causes the pulse to broaden asymmetrically, which causes an uncompressible pulse pedestal at the laser output. While this effect can be reduced by using two output couplers, in which case the first output coupler acts as a pulse cleaner, and cleaner pulses are obtained at the second output coupler, numerical simulations have lead to the believe that excessive third order dispersion limits the pulse stability, operation bandwidth and achievable pulse energy.

The compensation of third order dispersion with a nonlinear phase shift has been observed in other optical systems external to a laser oscillator. One example that is related to the embodiments of the present invention is chirped pulse amplification. Compensation of nonlinear phase shift with third order dispersion or vice versa has been demonstrated in so called chirped pulse amplification of short-pulse fiber lasers. Chirped pulse amplification is a well-known scheme for amplifying short laser pulses. The chirped pulse amplification scheme involves pulse stretching in time domain to reduce peak power, amplification, and re-compression to gain high peak power and sub-ps pulse duration. The amplifying system requires careful management of the dispersion to have zero net group delay dispersion and preferably zero net higher order dispersion. For some CPA systems it is observed that a nonzero net third order dispersion can be compensated with a sufficient amount of nonlinear phase that is build-up as the pulse is propagating through the stretcher, amplifier, and compressor stages.

It is observed both, when solving the nonlinear schrödinger equation and in experimental demonstrations that for a given third order dispersion there is an optimum nonlinear phase shift. The total phase shift is flattened as a function of wavelength and potential secondary structure or sometimes referred to as a pedestal in time domain is significantly reduced. The effect is due to the combined action of third order dispersion and self-phase modulation. Furthermore, studies in the literature show that compensating third order dispersion with a nonlinear phase shift produces the same result even if the sign of the third order dispersion is reversed. For zero nonlinear phase shift or nonlinear phase shifts away from the optimal value the pulse will exhibit secondary structure on the pulse edge resulting from un-compensated third order dispersion.

## Claims

1. A laser oscillator comprising:
a laser diode pump;
an isolator;
polarization controllers;
a length of single mode fiber and a length of higher-order mode fiber, where the group delay dispersion of the higher-order mode fiber is chosen to match 50% or more of the group delay dispersion of the single mode fiber, the single mode fiber comprising an ytterbium-doped fiber;
a first output comprising a polarization beamsplitter for pulse cleaning, configured for operating together with a non-linear polarization rotation, that takes place in the oscillator on the basis of non-linear polarization evolution, and a spectral filter to maintain a modelocked operation of the laser oscillator;
a second output,
wherein a length of the higher-order mode fiber is selected so that a third-order dispersion of the oscillator matches a nonlinear phase buildup in the cavity of the oscillator, and the nonlinear phase buildup is dependent upon the pulse energy of the oscillator; and
wherein an output ratio between the first and second output may be controlled via a half wave plate.

2. The oscillator of claim 1, further comprising two fiber polarization controllers, one controller being placed at an input of the higher-order mode fiber, and the other controller being placed at an output of the higher-order mode fiber.

3. A high pulse energy ytterbium laser comprising an oscillator according to one of claims 1 or 2.

4. A high pulse energy ytterbium laser comprising an oscillator according to claim 1, wherein the first output comprises the polarization beamsplitter for pulse cleaning, and works with the non-linear polarization rotation and the spectral filter to maintain a modelocked operation of the laser.

5. A method of matching third order dispersion in a high pulse energy ytterbium-fiber laser oscillator for compensating buildup of nonlinear phase in the oscillator comprising:
providing a length of a single mode fiber comprising an ytterbium-doped fiber in the laser oscillator;
providing polarization controllers and an isolator in the laser oscillator; selecting a length of a higher-order mode fiber to maintain a net group delay dispersion and third order dispersion within a predetermined range, wherein the third order dispersion matches a nonlinear phase buildup in the cavity of the oscillator;
adding the higher-order mode fiber in the laser oscillator;
wherein the ytterbium-fiber laser oscillator further comprises at least a first output and a second output, the first output comprising a polarization beamsplitter for pulse cleaning, which is configured for operating together with a non-linear polarization rotation, that takes place within the oscillator on the basis of non-linear polarization evolution, and a spectral filter to maintain a modelocked operation of the oscillator,
controlling an output ratio between the first and second output via a half wave plate.

6. The method of claim 5, further comprising two fiber polarization controllers, one controller being placed at an input of the higher-order mode fiber, and the other controller being placed at an output of the higher-order mode fiber.

## Patentansprüche

1. Ein Laseroszillator, der folgende Merkmale aufweist:
eine Laserdiodenpumpe;
einen Isolator;
Polarisationssteuerungen;
einen Abschnitt einer Einzelmode-Faser und einen Abschnitt einer Höhere-Ordnung-Mode-Faser, wobei die Gruppenlaufzeitdispersion der Höhere-Ordnung-Mode-Faser dahingehend ausgewählt ist, mit 50 % oder mehr der Gruppenlaufzeitdispersion der Einzelmode-Faser übereinzustimmen, wobei die Einzelmode-Faser eine Ytterbium-dotierte Faser aufweist;
einen ersten Ausgang, der einen Polarisationsstrahlenteiler zur Pulsreinigung aufweist, ausgebildet zum gemeinsamen Betrieb mit einer nichtlinearen Polarisationsrotation, die in dem Oszillator auf der Basis einer nichtlinearen Polarisationsentwicklung stattfindet, und einem Spektralfilter, um einen modengekoppelten Betrieb des Laseroszillators beizubehalten;
einen zweiten Ausgang,
wobei ein Abschnitt der Höhere-Ordnung-Mode-Faser derart ausgewählt ist, dass eine Dritte-Ordnung-Dispersion des Oszillators mit einem Nicht-Lineare-Phase-Aufbau in dem Resonator des Oszillators übereinstimmt und der Nicht-Lineare-Phase-Aufbau von der Pulsenergie des Oszillators abhängt; und
wobei ein Ausgabeverhältnis zwischen dem ersten und dem zweiten Ausgang über eine Halbwellenplatte gesteuert werden kann.

2. Der Oszillator gemäß Anspruch 1, der ferner zwei Faserpolarisationssteuerungen aufweist, wobei eine Steuerung an einem Eingang der Höhere-Ordnung-Mode-Faser platziert ist und die andere Steuerung an einem Ausgang der Höhere-Ordnung-Mode-Faser platziert ist.

3. Ein Hochpulsenergie-Ytterbium-Laser, der einen Oszillator gemäß einem der Ansprüche 1 oder 2 aufweist.

4. Ein Hochpulsenergie-Ytterbium-Laser, der einen Oszillator gemäß Anspruch 1 aufweist, wobei der erste Ausgang den Polarisationsstrahlenteiler zur Pulsreinigung aufweist und gemeinsam mit der nichtlineare Polarisationsrotation und dem Spektralfilter arbeitet, um einen modengekoppelten Betrieb des Lasers beizubehalten.

5. Ein Verfahren zum Abgleichen einer Dritte-Ordnung-Dispersion in einem Hochpulsenergie-Ytterbium-Faser-Laseroszillator zum Kompensieren eines Aufbaus einer nichtlinearen Phase in dem Oszillator, das folgende Schritte aufweist:
Bereitstellen eines Abschnittes einer Einzelmode-Faser, die eine Ytterbium-dotierte Faser aufweist, in dem Laseroszillator;
Bereitstellen von Polarisationssteuerungen und eines Isolators in dem Laseroszillator;
Auswählen eines Abschnittes einer Höhere-Ordnung-Mode-Faser, um eine Nettogruppenlaufzeitdispersion und eine Dritte-Ordnung-Dispersion in einem vorbestimmten Bereich beizubehalten, wobei die Dritte-Ordnung-Dispersion mit einem Nicht-Lineare-Phase-Aufbau in dem Resonator des Oszillators übereinstimmt;
Hinzufügen der Höhere-Ordnung-Mode-Faser in dem Laseroszillator;
wobei der Ytterbium-Faser-Laseroszillator ferner zumindest einen ersten Ausgang und einen zweiten Ausgang aufweist, wobei der erste Ausgang einen Polarisationsstrahlenteiler zur Pulsreinigung aufweist, ausgebildet zum gemeinsamen Betrieb mit einer nichtlinearen Polarisationsrotation, die in dem Oszillator auf der Basis einer nichtlinearen Polarisationsentwicklung stattfindet, und einem Spektralfilter, um einen modengekoppelten Betrieb des Oszillators beizubehalten,
Steuern eines Ausgabeverhältnisses zwischen dem ersten und dem zweiten Ausgang über eine Halbwellenplatte.

6. Das Verfahren gemäß Anspruch 5, das ferner zwei Faserpolarisationssteuerungen aufweist, wobei eine Steuerung an einem Eingang der Höhere-Ordnung-Mode-Faser platziert ist und die andere Steuerung an einem Ausgang der Höhere-Ordnung-Mode-Faser platziert ist.

## Revendications

1. Oscillateur laser, comprenant:
une pompe pour diode laser;
un isolateur;
des contrôleurs de polarisation;
une longueur de fibre monomode et une longueur de fibre de mode d'ordre supérieur, où la dispersion de retard de groupe de la fibre de mode d'ordre supérieur est choisie de manière à correspondre à 50% ou plus de la dispersion de retard de groupe de la fibre monomode, la fibre monomode comprenant une fibre à dopage d'ytterbium;
une première sortie comprenant un diviseur de faisceau de polarisation pour le nettoyage des impulsions, configuré pour fonctionner ensemble avec une rotation de polarisation non linéaire qui a lieu dans l'oscillateur sur base de l'évolution de polarisation non linéaire et un filtre spectral destiné à maintenir un fonctionnement en mode verrouillé de l'oscillateur laser;
une deuxième sortie,
dans lequel une longueur de la fibre de mode d'ordre supérieur est sélectionnée de sorte qu'une dispersion de troisième ordre de l'oscillateur corresponde à une accumulation de phase non linéaire dans la cavité de l'oscillateur, et l'accumulation de phase non linéaire dépend de l'énergie des impulsions de l'oscillateur; et
dans lequel un rapport de sortie entre les première et deuxième sorties peut être contrôlé par l'intermédiaire d'une lame demi-onde.

2. Oscillateur selon la revendication 1, comprenant par ailleurs deux contrôleurs de polarisation de fibre, un contrôleur étant placé à une entrée de la fibre de mode d'ordre supérieur, et l'autre contrôleur étant placé à une sortie de la fibre de mode d'ordre supérieur.

3. Laser à dopage d'ytterbium à haute énergie des impulsions comprenant un oscillateur selon l'une des revendications 1 ou 2.

4. Laser à dopage d'ytterbium à haute énergie des impulsions comprenant un oscillateur selon la revendication 1, dans lequel la première sortie comprend le diviseur de faisceaux de polarisation pour le nettoyage des impulsions, et fonctionne avec la rotation de polarisation non linéaire et le filtre spectral pour maintenir un fonctionnement en mode verrouillé du laser.

5. Procédé permettant de mettre en correspondance la dispersion de troisième ordre dans un oscillateur laser à fibre à dopage d'ytterbium à haute énergie des impulsions pour compenser l'accumulation de phase non linéaire dans l'oscillateur, comprenant le fait de:
prévoir une longueur d'une fibre monomode comprenant une fibre à dopage d'ytterbium dans l'oscillateur laser;
prévoir des contrôleurs de polarisation et un isolateur dans l'oscillateur laser;
sélectionner une longueur d'une fibre de mode d'ordre supérieur pour maintenir une dispersion de retard de groupe nette et une dispersion de troisième ordre dans une plage prédéterminée, où la dispersion de troisième ordre correspond à une accumulation de phase non linéaire dans la cavité de l'oscillateur;
ajouter la fibre de mode d'ordre supérieur dans l'oscillateur laser;
dans lequel l'oscillateur laser à fibre à dopage d'ytterbium comprend par ailleurs au moins une première sortie et une deuxième sortie, la première sortie comprenant un diviseur de faisceau de polarisation destiné au nettoyage des impulsions, configuré pour fonctionner ensemble avec une rotation de polarisation non linéaire qui a lieu dans l'oscillateur sur base de l'évolution de la polarisation non linéaire et un filtre spectral pour maintenir un fonctionnement en mode verrouillé de l'oscillateur,
contrôler un rapport de sortie entre la première et la deuxième sortie par l'intermédiaire d'une lame demi-onde.

6. Procédé selon la revendication 5, comprenant par ailleurs deux contrôleurs de polarisation de fibre, un contrôleur étant placé à une entrée de la fibre de mode d'ordre supérieur, et l'autre contrôleur étant placé à une sortie de la fibre de mode d'ordre supérieur.
